# EUROPÄISCHE PATENTSCHRIFT

(11) **EP 1 875 720 B1**
(45) Veröffentlichungstag und Bekanntmachung des Hinweises auf die Patenterteilung: **08.08.2012**
(21) Anmeldenummer: 06725525.7
(22) Anmeldetag: 03.04.2006
(51) Int. Cl.: B60R 16/037, G06F 21/00, H04L 29/08

(54) **SPEICHEREINRICHTUNG FÜR EIN NUTZERPROFIL**
MEMORY SYSTEM FOR A USER PROFILE
SYSTEME DE MEMOIRE DESTINE A UN PROFIL UTILISATEUR

(30) Priorität: 19.04.2005 DE 102005018078
(43) Veröffentlichungstag der Anmeldung: 09.01.2008
(73) Patentinhaber: ROBERT BOSCH GMBH, 70442 Stuttgart (DE)
(72) Erfinder: FLICK, Bernd, 31199 Diekholzen (DE)
(86) Internationale Anmeldenummer: PCT/EP2006/061286
(87) Internationale Veröffentlichungsnummer: WO 2006/111466

(56) Entgegenhaltungen:
- WO-A-02/15622
- WO-A-02/081251
- DE-A1- 10 063 331
- DE-A1- 10 134 437

## Beschreibung

### Stand der Technik

Die Erfindung geht aus von einer Speichereinrichtung für ein Nutzerprofil nach der Gattung des Hauptanspruchs. Aus der noch nicht offengelegten Deutschen Patentanmeldung DE 102004005733 ist eine Aufnahmeeinheit für einen Memory Stick in einem Fahrzeug bekannt. Diese Aufnahmeeinheit ist mit einem Autoradio verbunden, wobei auf dem Memory Stick Musikdaten oder individuelle Daten eines Benutzers, wie z.B. eine Stationstastenbelegung für das Autoradio abgelegt sind. Ferner ist es auch möglich, in einem externen Rechner eine Route vorzuplanen und auf den Memory Stick zu übertragen. Eine vom Fahrzeug gefahrene Route kann auf den Memory Stick geschrieben werden.

Aus der DE 101 34 437 ist ein Verfahren und eine Einrichtung zum interkommunikativen Import/Export von kraftfahrzeugspezifischen Daten bekannt. Kraftfahrzeugbezogene Daten und auch hinzukommende persönliche Daten des Benutzers können aus dem Kraftfahrzeug portabel ausgelagert werden. Ferner kann der PDA auch eine entsprechende Zugangsberechtigung für das Kraftfahrzeug oder für Schließsysteme eines Hauses oder einer Garage aufweisen.

### Vorteile der Erfindung

Die erfindungsgemäße Speichereinrichtung für ein Nutzerprofil mit den Merkmalen des Hauptanspruchs hat demgegenüber den Vorteil, dass ein Nutzerprofil, z.B. sowohl persönliche Ansteuerungsdaten für das Fahrzeug, als auch persönliche Kontaktdaten, für elektronische Einrichtungen oder Funktionseinheiten im Fahrzeug zur Verfügung stehen. Diese Daten können durch einen Fahrer stets mitgeführt und insbesondere auch in mehreren Fahrzeugen verwendet werden. Indem diese möglicherweise auch sensiblen

Daten aus dem Fahrzeug entfernt werden können, kann das Risiko eines Diebstahls dieser Daten vermindert werden. Zudem kann über eine bevorzugt standardisierte Schnittstelle auch der Austausch der Daten mit anderen Einrichtungen, insbesondere mit anderen Recheneinrichtungen und Kommunikationseinrichtungen, vereinfacht werden. Vorteilhaft ist ein Nutzerprofil für mehrere Einrichtungen oder Funktionseinheiten des Fahrzeugs auf nur einer Speichereinrichtung abgelegt. Hierdurch müssen nicht mehrere Speichereinrichtungen verwendet werden, um verschiedene Funktionen entsprechend einem Nutzerprofil des Fahrers einzustellen. Das Nutzerprofil kann um neue Funktionen erweitert werden bzw. Einstellungen für nicht mehr benötigte Funktionen können gelöscht werden.

Durch die in den Unteransprüchen aufgeführten Maßnahmen sind vorteilhafte Weiterbildungen und Verbesserungen der im Hauptanspruch angegebenen Speichereinrichtung möglich. Besonders vorteilhaft ist es, eine Schnittstelle zum Anschluss an eine externe Recheneinheit an der Speichereinheit anzuordnen. Der Datenaustausch wird hierdurch vereinfacht. Besonders vorteilhaft ist es hierbei, diese Schnittstelle als eine USB-Schnittstelle auszuführen, da derartige Schnittstellen weit verbreitet sind und einen einfachen Anschluss von Speichereinrichtungen ermöglichen.

Weiterhin ist es vorteilhaft, in der Speichereinrichtung zusätzlich Audiodaten zur Wiedergabe im Fahrzeug abzulegen. Hierdurch können sowohl die personenbezogenen Nutzerdaten, als auch die Audiodaten in einfacher Weise zur Nutzung in dem Fahrzeug mitgeführt werden.

Besonders vorteilhaft ist es ferner, die Daten in der Speichereinrichtung derart abzulegen, dass sie unabhängig von einem Fahrzeug bzw. von einem Fahrzeugtyp verwendet werden können. In verschiedenen Fahrzeugen möglicherweise verschiedener Typen kann somit ein Nutzer stets eine von ihm gewünschte Einstellung von Fahrzeugsystemen erhalten. Hierdurch wird z.B. die Nutzung eines Mietwagens vereinfacht, da sich der Fahrer nicht mehr über eine sich möglicherweise von seinem sonstigen Fahrzeug unterscheidende Bedienweise des Fahrzeugs informieren muss, um von ihm gewünschte Einstellungen von Fahrzeugsystemen vorzunehmen.

Weiterhin ist vorteilhaft, für den Fall, dass eine Einstellung einer elektronischen Einrichtung geändert wird, diese Einstellung auch auf der Speichereinrichtung abzulegen. Damit bleibt das Nutzerprofil auf der Speichereinrichtung stets aktuell.

Weiterhin ist es vorteilhaft, das Nutzerprofil auf der Speichereinrichtung codiert abzulegen. Hierdurch können insbesondere sensible persönliche Daten, insbesondere Adressdaten, gegen eine unbefugte Nutzung geschützt werden.

### Zeichnung

Ausführungsbeispiele der Erfindung sind in der Zeichnung dargestellt und in der nachfolgenden Beschreibung näher erläutert. Es zeigen
Figur 1 eine Fahrerinformationseinrichtung zum Anschließen einer erfindungsgemäßen Speichereinheit,
Figur 2 eine erfindungsgemäße Speichereinheit in einem schematischen Aufbau.

### Beschreibung des Ausführungsbeispiels

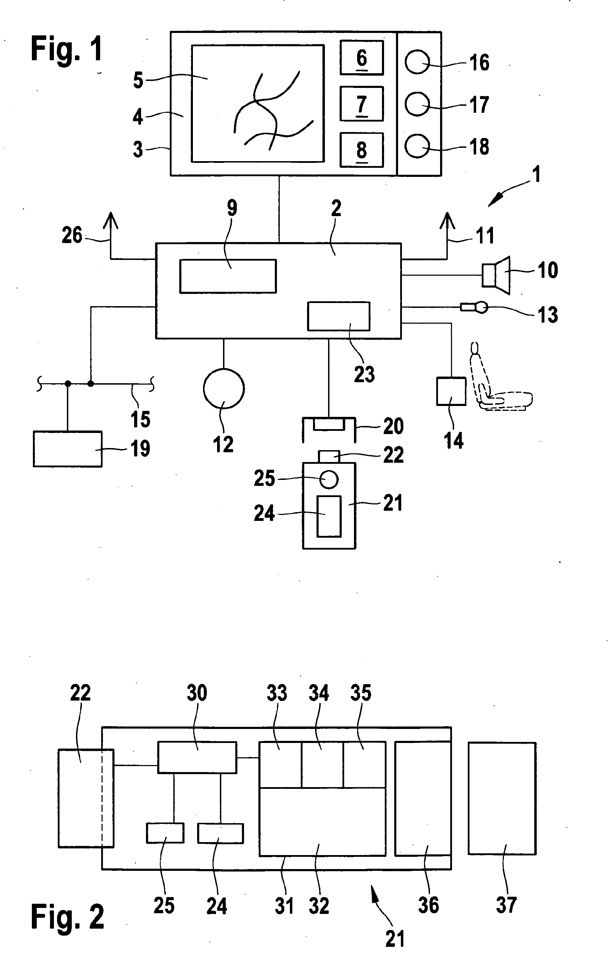

In der Figur 1 ist eine Fahrerinformationseinrichtung 1 dargestellt, die in einem Kraftfahrzeug angeordnet ist. Die Fahrerinformationseinrichtung 1 weist eine Zentraleinheit 2 auf, die z.B. in der Instrumententafel des Fahrzeugs verbaut ist. Die Zentraleinheit 2 ist mit einer Anzeigeeinheit 3 verbunden. Die Anzeigeeinheit 3 kann auch an der Vorderseite der Zentraleinheit 2 montiert sein. Die Anzeigeeinheit 3 weist eine Anzeigefläche 4 auf, auf der in dem hier dargestellten Ausführungsbeispiel eine Straßenkarte 5 dargestellt ist. Ferner sind in der Anzeigefläche 4 drei Auswahlfelder 6, 7, 8 dargestellt. Die Auswahlfelder 6, 7, 8 sind jeweils Bedientasten 16, 17, 18 an der Anzeigeeinheit 3 zugeordnet, die derart neben der Anzeigefläche 4 angeordnet sind, dass sie den jeweiligen Anzeigeflächen 6, 7, 8 zugeordnet sind. Über eine Betätigung eines der Bedienelemente 16, 17, 18 kann einer der in den Anzeigefeldern 6, 7, 8 dargestellten Befehle ausgeführt werden.

Ein in der Anzeigefläche 4 dargestelltes Bild wird von einer Recheneinheit 9 bereitgestellt, die in der Zentraleinheit 2 angeordnet ist. Die Zentraleinheit 2 ist ferner mit einem Lautsprecher 10 verbunden, der einer Audioausgabe dient. Bevorzugt weist die Fahrerinformationseinrichtung 1 die Funktion eines Autoradios auf. Hierzu ist die Zentraleinheit 2 mit einer Antenne 11 verbunden, die ein Radioprogramm empfängt. Ferner kann auch ein in ein Datenträgerlaufwerk 12 eingelegter Datenträger ausgelesen und darauf gespeicherte Musik wiedergegeben werden. In einer weiteren bevorzugten Ausführungsform weist die Fahrerinformationseinrichtung 1 auch eine Telefonfunktion auf. Hierzu ist an die Zentraleinheit 2 ein Mikrofon 13 angeschlossen. Eine Mobilfunkverbindung kann über eine Mobilfunkantenne 26 hergestellt werden. Einerseits kann eine Verbindung sprachgebunden erfolgen. Ferner ist auch eine Internet-Verbindung möglich. Damit können Internetseiten aufgerufen und in der Anzeigefläche 4 dargestellt werden. Die Mobilfunkverbindung ist z.B. als eine GSM-Verbindung oder als eine UMTS-Verbindung ausgeführt. In einer weiteren Ausführungsform können insbesondere auch mechanische und/oder elektronische Einstellungen im Fahrzeug, z.B. durch die Zentraleinheit 2 gesteuert werden. Diese Einstellungen können z.B. eine Sitzverstellung 14, eine Klimaregelung, eine Lüftungssteuerung, eine Lenkradstellung und/oder eine Spiegeleinstellung umfassen. Ferner ist es auch möglich, bevorzugt über einen Datenbus 15 auf eine Motorsteuerung 19 zuzugreifen. Hierdurch können z.B. Fahrtparameter des Fahrzeugs entsprechend den Wünschen des Benutzers gewählt werden.

Die Fahrerinformationseinrichtung 1 weist ferner einen Anschlussstecker 20 auf, der mit der Zentraleinheit 2 verbunden ist. An den Anschlussstecker 20 kann eine Speichereinrichtung 21 angeschlossen werden, die einen Stecker 22 aufweist, der mit dem Anschlussstecker 20 korrespondiert. Die Speichereinrichtung 21 kann nun von der Recheneinheit 9 in der Zentraleinheit 2 ausgelesen werden. Bevorzugt können Speicherinhalte in einen bevorzugt flüchtig ausgeführten Arbeitsspeicher 23 in der Zentraleinheit 2 übertragen werden.

Die Speichereinrichtung 21 wird bevorzugt über den Steckeranschluss mit einer Spannung versorgt. Gegebenenfalls kann sie auch über eine eigene Spannungsquelle verfügen, so dass in einer Ausführungsform auch eine Benutzung nach einem Herauslösen aus dem Anschlussstecker 20 ermöglicht wird. Für eine Benutzung außerhalb des Fahrzeugs weist die Speichereinrichtung 21 gemäß dieser Ausführungsform eine Anzeige 24 und wenigstens ein Bedienelement 25 auf. Die Speichereinrichtung 21 kann dabei so ausgeführt sein, dass sie nach einer Herausnahme aus dem Fahrzeug als eine tragbare Musikwiedergabeeinrichtung verwendet wird, an die z.B. ein Kopfhörer zur Musikwiedergabe anschließbar ist.

Die Steckerverbindung 20, 22 für die Speichereinrichtung 21 ist bevorzugt als eine USB-Schnittstelle ausgeführt (USB = Universal Serial Bus). Damit ist es möglich, die Speichereinrichtung 21 auch an herkömmliche Personal Computer, tragbare Computer oder ähnliche Recheneinheiten anzuschließen. Damit können Daten durch eine externen, in der Figur 1 nicht gezeigten Rechner auf die Speichereinrichtung 21 geschrieben und im Fahrzeug über den Anschlussstecker 20 der Recheneinheit 9 bzw. im allgemeinen der Fahrerinformationseinrichtung 1 zur Verfügung gestellt werden.

In der Figur 2 ist der Aufbau der Speichereinrichtung 21 im Detail dargestellt. Der Stecker 22 ist mit einer Recheneinheit 30 verbunden, die ein Auslesen eines Speichers 31 und einen Datentransport über den Stecker 22 koordiniert. In einer weiteren Ausführungsform kann ein Auslesen des Speichers 31 auch unmittelbar durch die Recheneinheit 9 erfolgen, so dass in diesem Fall auf eine eigene Recheneinheit 30 in der Speichereinrichtung 21 verzichtet werden kann. Gemäß der in der Figur 1 skizzierten Ausführungsform können von der Recheneinheit 30 auch eine fakultativ vorhandene Anzeige 24 und ein fakultativ vorhandenes Bedienelement 25 an der Speichereinrichtung 21 gesteuert bzw. ausgelesen werden. Der Speicher 31 der Speichereinrichtung 21 ist bevorzugt in der Weise strukturiert, dass in einem ersten, allgemein zugänglichen Bereich 32 allgemeine, zu transportierende Daten gespeichert sind. In diesem Bereich kann ein Benutzer z.B. Musikdaten ablegen, die von der Fahrerinformationseinrichtung 1 nach einem Auslesen über den Lautsprecher 10 im Fahrzeug wiedergegeben werden. Es können aber hier auch beliebige andere Daten gespeichert werden, die ein Benutzer nur transportieren möchte, wie z.B. Textdaten oder Bilddaten. Neben dem allgemeinen Bereich weist der Speicher 31 wenigstens einen geschützten Speicherbereich 33 auf. Der Speicherbereich 33 ist dabei bevorzugt einer Person zugeordnet. In einer besonderen Ausführungsform sind die in dem Speicherbereich 33 abgelegten Daten codiert abgelegt. Sie können z.B. nur dann ausgelesen werden, wenn über eine geeignete Bedieneinheit im Fahrzeug, z.B. über die Bedientasten 16, 17, 18, ein entsprechender Code durch einen Benutzer eingegeben wird. Für die Nutzung durch weitere Personen können weitere individuell zugeordnete Speicherbereiche 34, 35 in dem Speicher 31 vorgesehen sein. Sollte der Speicher 31 für eine Speicherung von Daten nicht ausreichen, so ist ein einer weiteren Ausführungsform an der Speichereinrichtung 21 eine Anschlussstelle 36 vorgesehen, über die z.B. eine Speicherkarte 37 zur Erweiterung des vorhandenen Speichers in die Speichereinrichtung 21 eingeschoben werden kann.

In einer weiteren Ausführungsform kann die Speichereinrichtung 21 auch lediglich als eine Speicherkarte ausgeführt sein. Unabhängig von der Art der Ausführung der Speichereinrichtung kann diese z.B. in eine Codekarte für das Fahrzeug integriert sein.

In dem Speicherbereich 33 ist ein Nutzerprofil für mehrere elektronische Einrichtungen im Fahrzeug oder aber für mehrere Funktionseinheiten einer elektronischen Einrichtung im Fahrzeug abgelegt. Diese Funktionseinheiten können in einer elektronischen Einrichtung z.B. in Form der Fahrerinformationseinrichtung 1 gemäß der Figur 1 integriert sein. Ferner können aber mit dem den Anschlussstecker 20 in einer weiteren Ausführungsform auch einzelne elektronische Einrichtungen im Fahrzeug verbunden sein. Ferner können auch an die Fahrerinformationseinrichtung 1, z.B. über einen Datenbus, wiederum einzelne elektronische Geräte angeschlossen sein. Das Nutzerprofil kann sich auf alle Funktionen und Einrichtungen, aber auch nur auf einen Teil der Funktionen und Einrichtungen beziehen.

Mit einem Anschließen der Speichereinrichtung 21, z.B. in Form eines Einsteckens einer als USB-Stick ausgeführten Speichereinheit, an den Anschlussstecker 20, wird das in der Speichereinrichtung 21 gespeicherte Nutzerprofil an die Fahrerinformationseinrichtung 1 übertragen. In einer weiteren Ausführungsform fordert der Fahrer eine Übertragung des Nutzerprofils selbst an, beispielsweise über ein Bedienelement der Instrumententafel des Fahrzeugs oder über ein Bedienelement an der Speichereinheit. Um ein Nutzerprofil auszuwählen, kann der Fahrer eines der in einem der Speicherbereiche 33, 34, 35 abgelegten Nutzerprofile unmittelbar auswählen oder er kann sich identifizieren, so dass ein ihm zugeordnetes Nutzerprofil an die Fahrerinformationseinrichtung 1 entsprechend der Identität des Nutzers übertragen wird. Nach der Übertragung werden die Einrichtungen und/oder Funktionseinheiten nach seinen Wünschen gemäß dem gespeicherten Nutzerprofil eingestellt. Hierbei werden gegebenenfalls auch dem Nutzerprofil zugeordnete Daten bereitgestellt.

Die Konfiguration des Nutzerprofils kann in der Weise erfolgen, dass der Benutzer zuerst die Speichereinrichtung 21 an eine externe Recheneinheit anschließt und dort bequem eine von ihm gewünschte Konfiguration vornimmt. In einer weiteren Ausführungsform ist es auch möglich, dass der Benutzer eine gewünschte Konfiguration der elektronischen Einrichtungen im Fahrzeug einstellt und diese Konfiguration auf der Speichereinrichtung 21 ablegt.

Insbesondere um persönliche Daten zu schützen identifiziert sich ein Benutzer nach dem Einstecken der Speichereinrichtung 21, z.B. über die Eingabe eines Codes, zu der er über die Anzeigeeinheit 3 aufgefordert wird. Im Anschluss daran wird das Nutzerprofil an die Zentraleinheit 2 einschließlich persönlicher Daten übertragen. Der Benutzer kann nun auch auf gegebenenfalls in den Arbeitsspeicher 23 übertragene, persönliche Kontaktdaten zugreifen. Wird die Speichereinrichtung 21 aus dem Fahrzeug entfernt, so werden diese Daten, spätestens nach Abschalten des Fahrzeugs, in dem Arbeitsspeicher 23 gelöscht.

Ein nächster Nutzer hat auf die Konfigurationsdaten keinen Zugriff mehr. Mechanische und elektronische Einstellungen wie z.B. die Sitzeinstellung 14 bleiben unverändert, während z.B. eine Navigationsvorrichtung, eine Autoradiofunktion und/oder eine Telefonfunktion nach einem Herauslösen der Speichereinrichtung 21 und erneutem Starten des Fahrzeugs in einer Standard-Konfiguration starten, wenn kein neues Nutzerprofil zugeführt wird.

Die Daten sind dabei bevorzugt derart in dem Speicher 31 abgelegt, dass sie von verschiedenen Fahrzeugmodellen bzw. verschiedenen Fahrzeugtypen auslesbar sind. Wird z.B. eine bestimmte Sitzeinstellung vorgegeben, so wird der Sitz in jedem, hierzu kompatiblen Fahrzeug entsprechend eingestellt, sofern die Abmessungen des Fahrzeugs dies zulassen.

In einem in der Figur 1 nicht dargestellten Ausführungsbeispiel kann anstelle einer Steckerverbindung 20, 22 gemäß einer Weiterbildung auch eine drahtlose Verbindung, z.B. eine Blue-Tooth-Verbindung, zwischen der Speichereinrichtung 21 und der Fahrerinformationseinrichtung l vorgesehen werden. In diesem Fall wäre es nicht erforderlich, die Speichereinrichtung 21 in einen Anschlussstecker 20 einzustecken. Es wäre lediglich erforderlich, eine Blue-Tooth-Verbindung zu der Fahrerinformationseinrichtung 1 herzustellen.

Im Folgenden sind Beispiele für Nutzerprofile für verschiedene elektronische Einrichtungen im Fahrzeug im Detail dargestellt. Die Speichereinrichtung 21 soll dabei so ausgeführt sein, dass sie wenigstens für zwei dieser beispielhaft erläuterten oder für andere elektronische Einrichtungen bzw. unabhängige Funktionseinheiten die Möglichkeit bietet, für die Benutzung der jeweiligen Funktionen ein Profil indem Speicher 31 abzulegen.

### Navigationsfunktion

Für eine Navigationsfunktion können für einen Fahrer gewünschte Fahrziele, insbesondere häufig gewählte Fahrziele, in einer Liste abgelegt werden. Ferner können auch die zuletzt angewählten Fahrziele abgelegt werden. Insbesondere in diesem Fall mag für einen Benutzer das Interesse bestehen, dass ein nachfolgender Nutzer nicht jedes seiner Fahrziele nachvollziehen kann. Andererseits ist es für einen Benutzer vorteilhaft, von ihm möglicherweise gewünschte Fahrziele einfach eingeben zu können, ohne diese jeweils erneut gegebenenfalls kompliziert auszuwählen. Als ein Nutzerprofil für eine Navigationsfunktion wird daher eine Menge vorgegebener Fahrziele in der Speichereinrichtung 21 abgelegt. Ferner kann ein Nutzerprofil für die Navigation auch eine bevorzugte Straßenklasse oder auch eine von dem Fahrer im Allgemeinen gefahrene Durchschnittsgeschwindigkeit umfassen. Damit kann die Bedienung der Navigationsvorrichtung vereinfacht werden und sowohl die Routenberechnung zu einem Fahrziel, aber auch die Zeitkalkulation für die Berechnung der Fahrtroute optimiert werden.

### Sitzeinstellung

Die Position des Fahrersitzes kann bevorzugt in der Speichereinrichtung 21 abgelegt werden. Nach Anschließen der Speichereinrichtung 21 wird die gewünschte Sitzposition für den Fahrer eingestellt. In einer bevorzugten Ausführungsform werden diese Daten derart abgelegt, dass sie fahrzeugunabhängig ausgelesen werden können. Ein Sitz in einem Fahrzeug wird daher immer angepasst an die Person des Fahrers eingestellt. Hierzu muss die Speichereinrichtung 21 die gespeicherten Größendaten des Fahrers mit den räumlichen Abmaßen im Bereich des Fahrersitzes und des Lenkrades im jeweiligen Fahrzeug vergleichen und eine entsprechende Position des Sitzes für den Fahrer auswählen.

### Klimasteuerung

Die einem Fahrer angenehme Einstellung des Fahrzeugklimas kann ebenfalls auf der Speichereinrichtung 21 abgelegt werden. Nach den entsprechenden Wünschen des Fahrers wird nach Verbinden der Speichereinrichtung 21 mit der Fahrerinformationseinrichtung 1 ein Regelung der Klimaanlage zur herstellen des gewünschten Fahrzeugklimas eingestellt.

### Autoradio

Eine gewünschte Audioeinstellung, wie z.B. eine Klangeinstellung, eine geschwindigkeitsabhängige Lautstärkenregelung, eine Senderpräferenzierung oder eine Programmtyp-Binstellung, wie z.B. Verkehrsfunk oder Nachrichten, werden in der Speichereinrichtung 21 abgelegt und stehen im Rahmen des Nutzerprofils für eine Autoradiofunktion zur Verfügung.

### Kontaktdaten

Ferner werden auf der Speichereinrichtung 21 persönliche Kontaktdaten des Nutzers abgelegt. Dies können z.B. Telefonnummern, Internetadressen oder E-Mail-Adressen sein. Bevorzugt werden diese Daten an die Fahrerinformationseinrichtung so übertragen, dass ein Benutzer für das Herstellen einer Internet-Verbindung, für das Schreiben einer E-Mail oder für ein Herstellen einer Telefonverbindung zu dem jeweiligen Adresseinhaber die Fahrerinformationseinrichtung 1 nutzen kann. Auch hierbei können gegebenenfalls bevorzugt zuletzt angerufene Nummern oder bevorzugte Kontakte gesondert gespeichert werden, so dass ein Benutzer besondere Telefonnummern sehr schnell heraussuchen kann. Ohne eine aufwändige Datenübertragung oder eine Neueingabe vornehmen zu müssen, kann ein Benutzer diese Daten in verschiedenen Fahrzeugen nutzen. Ferner kann er sie mit anderen elektronischen Geräten synchronisieren, so dass er z.B. seine im Mobiltelefon gegebenenfalls neu eingegebenen Adressdaten auch im Fahrzeug nutzen kann. Ferner können entsprechend auch auf einem PC vorhandene Daten auf einfache Weise auf die Speichereinrichtung 21 übertragen und damit im Fahrzeug genutzt werden. Umgekehrt können auch im Fahrzeug eingegangene E-Mails oder Textnachrichten mit gegebenenfalls neuen Adressdaten auf die Speichereinrichtung 21 geschrieben und damit auf den Computer oder das Mobiltelefon des Benutzers übertragen werden.

### Musikwiedergabe

Insbesondere für den Fall, dass entweder auf einem Datenträger in dem Datenträgerlaufwerk 12oder auf der Speichereinrichtung 21 Musikdaten gespeichert werden, kann als Nutzerprofil eine Abspielliste abgelegt werden. Somit ist es möglich, z.B. auf einem Massenspeichermedium im Datenträgerlaufwerk 12 eine große Anzahl an Musiktiteln mitzuführen. Hierbei ist es möglich z.B. auf einem DVD-Datenträger mehrere hundert Musiktitel zu speichern. Um eine Anpassung der Wiedergabe an den individuellen Musikgeschmack des Benutzers zu ermöglichen, kann dieser eine Abspielliste bevorzugt an seinem eigenen Computer festlegen, in Abhängigkeit von der eine bestimmte Reihenfolge und/oder gegebenenfalls einer bestimmten Untermenge von Musiktiteln auf den Datenträger bzw. auf der eingesteckten Speicherkarte 37 oder in dem Speicher 31 zur Wiedergabe ausgewählt wird. Für die Musikwiedergabe ist die gespeicherte Abspielliste ein Nutzerprofil, das personenzugeordnet abgerufen werden kann.

### Motorsteuerung

Je nach Fahrzeug können verschiedene Ansprechverhalten des Fahrzeugantriebs ermöglicht werden. So kann z.B. ein Fahrer zwischen sparsamer und besonders sportlicher Fahrweise auswählen. Welche Fahrweise er wünscht, kann in einem entsprechenden Nutzerprofil für die Motorsteuerung auf der Speichereinrichtung 21 hinterlegt sein.

### Nutzerrechte

Für die Nutzung digitaler Informationen oder auch bestimmter, auf Computerprogrammen basierender Funktionen im Fahrzeug können individuelle Nutzerrechte vergeben werden. Insbesondere für die Wiedergabe von digital gespeicherten Musikstücken sind gegebenenfalls Lizenzen erforderlich. So könnte es unter Umständen problematisch sein, wenn Musikstücke von der Speichereinrichtung 21 nicht flüchtig in einen Speicher der Fahrerinformationseinrichtung 1 übertragen werden. Denn hierdurch würde eine neue, digitale Kopie des gespeicherten Musikstückes geschaffen. Möglicherweise hat ein Nutzer aber für eine derartige Kopie keine Rechte. Die Rechte für eine Wiedergabe bzw. für eine temporäre Speicherung zur Verarbeitung können aber in einem gesonderten Nutzerprofil abgelegt werden, in dem derartige digitale Nutzerrechte verwaltet werden. Ferner ist es auch möglich, dass eine Vielzahl von Musikstücken auf einem Massenspeichermedium mitgeführt wird und Lizenzen für die Nutzung dieser Musikstücke einzeln für eine vorgegebene Zeit erworben werden können. In diesem Fall wäre nicht mehr das Musikstück zu übertragen, sondern gegebenenfalls nur ein zeitlich begrenztes Nutzerrecht. Dieses kann über eine geeignete Internet-Verbindung abgerufen und auf der Speichereinrichtung 21 gespeichert werden. Um eine zeitliche Überprüfung zu ermöglichen, weißt die Fahrerinformationseinrichtung 1 hierzu z.B. eine Uhrenschaltung oder eine Zeitsynchronisation über das Internet auf.

Ferner ist es z.B. auch möglich, bestimmte Fahrzeugfunktionen über Nutzerrechte zu erlauben oder zu sperren. So ist es z.B. möglich, ein Fahrzeug mit einer Navigationsfunktion auszustatten. Die Navigationsfunktion ist für einen Nutzer aber nur dann möglich, wenn ein entsprechendes Nutzerrecht, gegebenenfalls auch zeitlich begrenzt, erworben und in der Speichereinrichtung 21 abgelegt wird. Diese Erlaubnis kann sich nicht nur auf die Benutzung einer Funktion an sich, sondern auch auf die Nutzung von Daten z.B. in dem Datenträgerlaufwerk 12 beziehen. Über den Erwerb eines entsprechenden Nutzerrechtes über den Heim-Computer und über das Internet könnte z.B. ein Nutzer für eine Urlaubsfahrt das Recht erwerben, für einen Monat ein in dem Datenträgerlaufwerk 12 gespeicherten Datensatz für eine Kartenbasis, z.B. von Frankreich zu erwerben. Während der Benutzer ansonsten nur im deutschen Straßennetz fährt, hätte er für eine derartige Nutzung in der übrigen Zeit keine Verwendung. Durch eine zeitlich begrenzte Nutzung der entsprechenden Kartenbasis kann ihm diese Nutzung gegebenenfalls für einen günstigeren Preis im Vergleich zu einer Dauernutzung eingeräumt werden. Ferner ist es auch möglich, dass jemand, der an verschiedenen Orten mehrere Fahrzeuge nutzt, die Lizenz für die Nutzung nur einmal erwirbt, aber auch nur ihm diese Rechte zustehen. Ist z.B. in einen Mietwagen eine Kartendatenbasis für Westeuropa gesamt eingebaut, so könnte ein Nutzer, der beispielsweise Nutzungsrechte für die Navigation in Frankreich, Deutschland und der Schweiz hat, diese Rechte auch nutzen, wenn er beispielsweise in Deutschland ein entsprechendes Fahrzeug mietet. Ein anderer Mieter, der über die entsprechenden Rechte nicht verfügt, kann diese Funktion nicht nutzen, müsste dafür aber auch keine Zahlung leisten.

### Anzeige

Ferner können auch Einstellungen der Anzeigeeinheit 3, wie z.B. ein Bildschirmhintergrund, Schriftart, Farbeinstellungen für ein Bedienmenü und/oder die Menügestaltung selbst, z.B. die Form der Auswahlfelder 6, 7, 8, in dem Nutzerprofil abgelegt sein. Mit einer Aktivierung des Nutzerprofils stellt die Recheneinheit 9 die Darstellung in der Anzeigefläche 4 gemäß den Wünschen des Nutzers ein.

## Patentansprüche

1. Speichereinrichtung für ein Nutzerprofil für mehrere elektronische Einrichtungen und/oder Funktionseinheiten (1, 12, 14,19) eines Kraftfahrzeugs mit einer Schnittstelle (22) zur Erstellung einer lösbaren Verbindung der Speichereinrichtung (21) mit den elektronischen Einrichtungen und/oder Funktionseinheiten (1, 12, 14,19) und zur Übertragung des Nutzerprofils an elektronischen Einrichtungen und/oder Funktionseinheiten (1, 12, 14, 19), **dadurch gekennzeichnet, dass** das in der sperchereinrichtung abgeleste Nutzerprofil Nutzungsrechte für in den elektronischen Einrichtungen und/oder Funktionseinheiten (1, 12, 14, 19) gespeicherte Daten oder Programme umfasst.

2. Speichereinrichtung nach Anspruch 1, **dadurch gekennzeichnet, dass** das Nutzerprofil Kontaktdaten, insbesondere Telefonkontakte, Internetadressen oder E-Mail-Adressen umfasst.

3. Speichereinrichtung nach einem der vorhergehenden Ansprüche, **dadurch gekennzeichnet, dass** das Nutzerprofil mechanische Einstellungen wenigstens einer Fahrzeugeinrichtung (14) und/oder Parameter für den Betrieb wenigstens einer Einrichtung (19) für den Fahrzeugantrieb umfasst.

4. Speichereinrichtung nach einem der vorhergehenden Ansprüche, **dadurch gekennzeichnet, dass** das Nutzerprofil in der Speichereinrichtung (21) derart abgelegt ist, dass es in einem Fahrzeug unabgängig von dem Typ des Fahrzeugs auswertbar sind.

5. Speichereinrichtung nach einem der vorhergehenden Ansprüche, **dadurch gekennzeichnet, dass** ein geändertes Nutzerprofil nach einer Nutzung der elektronischen Einrichtungen und/oder Funktionseinheiten (1,12, 14, 19) geändert auf der Speichereinrichtung (21) speicherbar ist.

6. Speichereinrichtung nach einem der vorhergehenden Ansprüche, **dadurch gekennzeichnet, dass** das Nutzerprofil auf der Speichereinrichtung codiert abgelegt ist.

7. Speichereinrichtung nach einem der vorhergehenden Ansprüche, **dadurch gekennzeichnet, dass** die Schnittstelle (22) zum Anschluss der Speichereinrichtung an eine externe Recheneinheit geeignet ist.

8. Speichereinrichtung nach Anspruch 7, **dadurch gekennzeichnet, dass** die Schnittstelle eine USB-Schnittstelle ist.

9. Verwendung einer Speichereinrichtung mit einem Nutzerprofil nach einem der vorhergehenden Ansprüche in einem Kraftfahrzeug zur Steuerung mehrerer elektronischer Einrichtungen oder Funktionseinheiten in dem Kraftfahrzeug.

## Claims

1. Memory device for a user profile for a plurality of electronic devices and/or functional units (1, 12, 14, 19) in a motor vehicle having an interface (22) for setting up a breakable connection from the memory device (21) to the electronic devices and/or functional units (1, 12, 14, 19) and for transmitting the user profile to electronic devices and/or functional units (1, 12, 14, 19), **characterized in that** the user profile stored in the memory device comprises usage rights for data or programs stored in the electronic devices and/or functional units (1, 12, 14, 19).

2. Memory device according to Claim 1, **characterized in that** the user profile comprises contact data, particularly telephone contacts, Internet addresses or e-mail addresses.

3. Memory device according to one of the preceding claims, **characterized in that** the user profile comprises mechanical settings for at least one vehicle device (14) and/or parameters for the operation of at least one device (19) for the vehicle drive.

4. Memory device according to one of the preceding claims, **characterized in that** the user profile is stored in the memory device (21) such that it can be evaluated in a vehicle irrespective of the type of the vehicle.

5. Memory device according to one of the preceding claims, **characterized in that** an amended user profile can be stored in amended form on the memory device (21) following use of the electronic devices and/or functional units (1, 12, 14, 19).

6. Memory device according to one of the preceding claims, **characterized in that** the user profile is stored in coded form on the memory device.

7. Memory device according to one of the preceding claims, **characterized in that** the interface (22) is suitable for connecting the memory device to an external computation unit.

8. Memory device according to Claim 7, **characterized in that** the interface is a USB interface.

9. Use of a memory device having a user profile according to one of the preceding claims in a motor vehicle for controlling a plurality of electronic devices or functional units in the motor vehicle.

## Revendications

1. Dispositif de mémorisation pour un profil d'utilisateur pour plusieurs équipements électroniques et/ou unités fonctionnelles (1, 12, 14, 19) d'un véhicule automobile, comprenant une interface (22) pour établir une liaison amovible du dispositif de mémorisation (21) avec les équipements électroniques et/ou unités fonctionnelles (1, 12, 14, 19) et pour transmettre le profil d'utilisateur aux équipements électroniques et/ou unités fonctionnelles (1, 12, 14, 19), **caractérisé en ce que** le profil d'utilisateur stocké dans le dispositif de mémorisation comprend des droits d'utilisation pour des données ou des programmes mémorisés dans les équipements électroniques et/ou unités fonctionnelles (1, 12, 14, 19).

2. Dispositif de mémorisation selon la revendication 1, **caractérisé en ce que** le profil d'utilisateur comprend des données de contact, notamment des numéros de téléphone, adresses Internet ou adresses de messagerie électronique.

3. Dispositif de mémorisation selon l'une des revendications précédentes, **caractérisé en ce que** le profil d'utilisateur comprend des réglages mécaniques d'au moins un équipement de véhicule (14) et/ou des paramètres pour le fonctionnement d'au moins un équipement (19) pour l'entraînement du véhicule.

4. Dispositif de mémorisation selon l'une des revendications précédentes, **caractérisé en ce que** le profil d'utilisateur est stocké dans le dispositif de mémorisation (21) de telle sorte qu'il peut être interprété dans un véhicule indépendamment du type de véhicule.

5. Dispositif de mémorisation selon l'une des revendications précédentes, **caractérisé en ce qu'**un profil d'utilisateur modifié peut être mémorisé modifié sur le dispositif de mémorisation (21) après une utilisation des équipements électroniques et/ou unités fonctionnelles (1, 12, 14, 19).

6. Dispositif de mémorisation selon l'une des revendications précédentes, **caractérisé en ce que** le profil d'utilisateur est stocké codé sur le dispositif de mémorisation.

7. Dispositif de mémorisation selon l'une des revendications précédentes, **caractérisé en ce que** l'interface (22) convient pour un raccordement du dispositif de mémorisation à une unité de calcul externe.

8. Dispositif de mémorisation selon la revendication 7, **caractérisé en ce que** l'interface est une interface USB.

9. Utilisation d'un dispositif de mémorisation avec un profil d'utilisateur selon l'une des revendications précédentes dans un véhicule automobile pour commander plusieurs équipements électroniques ou unités fonctionnelles dans le véhicule automobile.
